(19) Europäisches Patentamt
European Patent Office
Office européen des brevets

(11) **EP 4 400 814 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **23151433.2**

(22) Anmeldetag: **13.01.2023**

(51) Internationale Patentklassifikation (IPC):
**G01F 1/66** (2022.01)     **G01F 1/84** (2006.01)
**G01N 9/00** (2006.01)

(52) Gemeinsame Patentklassifikation (CPC):
**G01F 1/66; G01F 1/84; G01N 9/002;**
G01N 2009/006

(54) **MESSVORRICHTUNG UND VERFAHREN ZUM MESSEN EINES MITTELS EINES FLÜSSIGERDGASSTROMS TRANSPORTIERTEN ENERGIEMENGENSTROMS**

MEASURING DEVICE AND METHOD FOR MEASURING A QUANTITY OF ENERGY TRANSPORTED BY MEANS OF A LIQUEFIED NATURAL GAS STREAM

DISPOSITIF DE MESURE ET PROCÉDÉ DE MESURE D'UN FLUX DE QUANTITÉS D'ÉNERGIE TRANSPORTÉES AU MOYEN D'UN FLUX DE GAZ NATUREL LIQUÉFIÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**17.07.2024 Patentblatt 2024/29**

(73) Patentinhaber: **SICK Engineering GmbH 01458 Ottendorf-Okrilla (DE)**

(72) Erfinder:
• **Friedrich, Sebastian 01099 Dresden (DE)**
• **Oberländer, Martin 01099 Dresden (DE)**
• **Ehrlich, Andreas 01129 Dresden (DE)**

(74) Vertreter: **Manitz Finsterwald Patent- und Rechtsanwaltspartnerschaft mbB Martin-Greif-Strasse 1 80336 München (DE)**

(56) Entgegenhaltungen:
EP-B1- 3 021 117     US-A1- 2019 219 556
US-A1- 2022 205 406     US-A1- 2022 349 867

**Beschreibung**

Die vorliegende Erfindung betrifft Messvorrichtungen zum Messen eines mittels eines Flüssigerdgastroms transportierten Energiemengenstroms sowie entsprechende Verfahren.

Flüssigerdgas ist die Bezeichnung für verflüssigtes aufbereitetes Erdgas, das auf eine Temperatur unterhalb des Siedepunkts abgekühlt wird, typischerweise auf -161°C bis -164°C. Flüssigerdgas wird auch als LNG (abgekürzt für englisch: liquefied natural gas) bezeichnet und weist nur etwa ein Sechshundertstel des Volumens von Erdgas in seiner gasförmigen Phase auf.

Erdgas enthält in der Regel eine Mischung aus Methan als einem Hauptbestandteil und weiteren Bestandteilen wie höheren Alkanen, hauptsächlich Ethan, Propan und Butan, sowie Stickstoff, Kohlendioxid, Wasserdampf und ggf. weiteren Nebenbestandteilen. Um die Lagerung und den Transport von Erdgas zu vereinfachen, wird aus einer Erdgas-Förderstätte gefördertes Erdgas zu einer Gasverflüssigungsanlage transportiert, wo es aufbereitet und durch Herunterkühlen verflüssigt wird. Vor der Verflüssigung werden bestimmte Bestandteile aus dem Erdgas entfernt, um z.B. eine Verfestigung während der Verflüssigung zu vermeiden oder um Kundenanforderungen zu erfüllen. Dazu werden Verfahren wie Adsorption, Absorption und kryogene Rektifikation angewandt.

In Abhängigkeit von der geographischen Herkunft des Erdgases, insbesondere in Abhängigkeit von der spezifischen Förderstätte, sowie auch in Abhängigkeit von der jeweiligen Aufbereitung, kann Flüssigerdgas qualitativ und quantitativ unterschiedliche Zusammensetzungen aufweisen, d.h. sowohl die Arten der im Flüssigerdgas enthaltenen Bestandteile als auch deren Mengenanteile können variieren. Beispielsweise kann der Stoffmengenanteil von Methan zwischen 87 Mol-% und mehr als 99 Mol-% variieren.

Der Transport von Flüssigerdgas kann auf vielfältige Weise erfolgen, beispielsweise mittels Rohrleitungen, Spezialschiffen, Kesselwagen, Tankwagen oder Tankcontainern. Zu Abrechnungszwecken ist es erforderlich, die Menge des transportierten bzw. umgeladenen Flüssigerdgases zu erfassen. Eine Mengenmessung eines in einer Rohrleitung transportierten Flüssigerdgasstroms kann beispielsweise mit Hilfe von geeigneten Durchflussmessgeräten erfolgen, wobei hier verschiedene Verfahren zum Einsatz kommen. Mittels Ultraschall-basierten Durchflussmessgeräten kann beispielsweise ein Volumenstrom ermittelt werden. Andere Durchflussmessgeräte, welche insbesondere auf dem Coriolis-Prinzip basieren, ermöglichen die Ermittlung eines Massenstroms.

In der Praxis ist jedoch für die Abrechnung von gelieferten Flüssigerdgasmengen weniger die gelieferte Masse oder das gelieferte Volumen relevant, sondern die gelieferte Energiemenge. Sofern der Brennwert eines erfassten Flüssigerdgasstroms bekannt ist, ist es ohne weiteres möglich, auf der Grundlage eines gemessenen Volumenstroms oder Massenstroms den Energiemengenstrom zu errechnen. Oftmals ist jedoch die konkrete Zusammensetzung eines zu erfassenden Flüssigerdgasstroms nicht bekannt. Um eine präzise Umrechnung eines erfassten Massenstroms oder Volumenstroms in einen Energiemengenstrom zu ermöglichen, ist es bei herkömmlichen Messverfahren erforderlich, eine Probenmenge des erfassten Flüssigerdgasstroms zu analysieren, um den Brennwert der Gasprobe direkt, d.h. experimentell durch kalorische Verfahren, oder indirekt aufgrund einer gaschromatographischen Analyse der Stoffzusammensetzung der Gasprobe (wozu eine Regasifizierung einer dem Flüssigerdgasstroms entnommenen Probe notwendig ist) und einer Datenbasis für die einzelnen Brennwerte zu ermitteln.

Eine derartige Brennwertbestimmung ist jedoch mit einem hohen Aufwand und entsprechenden Kosten verbunden. Mangels geeigneter In-situ-Messverfahren ist die Bestimmung des Energiemengenstroms zudem nur mit einer zeitlichen Verzögerung möglich.

EP 3 021 117 B1 befasst sich mit der Bestimmung spezifischen Größen für die Gasbeschaffenheit, insbesondere des Brennwerts, von Gasen oder Gasgemischen. Die Ermittlung eines Volumenstroms und einer Schallgeschwindigkeit erfolgt mittels einer Ultraschallmesseinrichtung. Neben der Temperatur und der Schallgeschwindigkeit werden zusätzlich auch die Wärmeleitfähigkeit und die Wärmekapazität ermittelt und zur Korrelation der gewünschten Größe für die Gasbeschaffenheit verwendet.

US 2022/205406 A1 bezieht sich auf die Ermittlung des Energiegehalts einer bestimmten Kraftstoffmenge bei der Steuerung von Brennkraftmaschinen, wobei der Brennwert bei unterschiedlichen Kraftstoffqualitäten variieren kann. Zur Ermittlung des Massenstroms und der Kraftstoffdichte können ein Massendurchflussmesser vom Coriolis-Typ und ein Temperatursensor verwendet werden. Auf der Grundlage der Kraftstofftemperatur und der gemessenen Kraftstoffdichte kann eine temperaturangepasste Kraftstoffdichte ermittelt werden, auf deren Grundlage wiederum ein oder mehrere Parameter ermittelt werden können, die die Kraftstoffqualität beschreiben.

Aus US 2019/219556 A1 ist die Verwendung von Ultraschall-Durchflussmessern zur Messung der Schallgeschwindigkeit in Echtzeit und unter Prozessbedingungen für Flüssigerdgasströme bekannt. Es wird ein Verfahren zur Messung des Energiegehalts von Gas beschrieben, bei welchem neben einem Ultraschallsensor zusätzlich ein Radarsensor zur Ermittlung der relativen Permittivität des Gases verwendet wird.

In US 2022/349867 A1 ist ein Coriolis-Durchflussmeter als Beispiel für einen Vibrationssensor in einem System zur Messung des Echtzeit-Energiegehalts auf der Grundlage der Dichte und der Massendurchflussrate in einem Flüssigerdgasstrom erwähnt.

Es ist die Aufgabe der Erfindung, eine Messvorrichtung und ein Verfahren zum Messen eines mittels eines Flüssigerdgasstroms transportierten Energiemengenstroms anzugeben, welches auch dann eine präzise Messung ermöglicht, wenn die qualitative und quantitative chemische Zusammensetzung des Flüssigerdgasstrom nur teilweise bekannt ist.

Die Lösung der Aufgabe erfolgt durch Messvorrichtungen mit den Merkmalen der unabhängigen Vorrichtungsansprüche und durch Verfahren mit den Merkmalen der unabhängigen Verfahrensansprüche.

Eine erfindungsgemäße Messvorrichtung zum Messen eines mittels eines Flüssigerdgasstroms transportierten Energiemengenstroms umfasst eine Ultraschallmesseinrichtung, welche zum Messen der Strömungsgeschwindigkeit des Flüssigerdgasstroms und der Schallgeschwindigkeit in dem Flüssigerdgasstrom auf der Grundlage von ermittelten Laufzeiten von mit und gegen die Strömung des Flüssigerdgasstroms auf einem Messpfad ausgesandten und empfangenen Ultraschallsignalen eingerichtet ist, einen Temperatursensor, welcher zum Messen der Temperatur des Flüssigerdgasstroms eingerichtet ist, und eine Auswerteeinheit, welche mit der Ultraschallmesseinrichtung und dem Temperatursensor verbunden ist, um jeweilige Messwerte für die Strömungsgeschwindigkeit, die Schallgeschwindigkeit und die Temperatur zu empfangen, wobei die Auswerteeinheit dazu eingerichtet ist, zumindest auf der Grundlage der Strömungsgeschwindigkeit und der Querschnittsfläche des Flüssigerdgasstroms den Volumenstrom des Flüssigerdgasstroms zu ermitteln, zumindest auf der Grundlage der Schallgeschwindigkeit und der Temperatur mittels einer Modellfunktion den volumenbezogenen Brennwert des Flüssigerdgasstroms zu ermitteln, und auf der Grundlage des ermittelten Volumenstroms und des ermittelten volumenbezogenen Brennwerts den transportierten Energiemengenstrom zu ermitteln, wobei die Modellfunktion basierend auf einem Datensatz bestimmt ist, welcher für eine Mehrzahl von unterschiedlichen Zusammensetzungen von Flüssigerdgas den volumenbezogenen Brennwert einer jeweiligen Zusammensetzung angibt.

Die Messvorrichtung kann beispielsweise in oder an einer Rohrleitung angeordnet sein, wobei in der Regel der Querschnitt der Rohrleitung am Ort der Strömungsgeschwindigkeitsmessung die Querschnittsfläche des Flüssigerdgasstroms bestimmt. Der ermittelte Energiemengenstrom kann dann zum Beispiel von einer geeigneten Ausgabeeinheit angezeigt werden, zum Beispiel in einem Speicher zur weiteren Verwendung abgelegt werden oder gleich an eine Verarbeitungs- und/oder Verrechnungseinheit weitergeleitet werden.

Mit der erfindungsgemäßen Messvorrichtung wird in an sich bekannter Weise der Volumenstrom, also ein pro Zeiteinheit transportiertes Volumen, ermittelt. Die Ermittlung der Strömungsgeschwindigkeit auf der Grundlage von ermittelten Laufzeiten von mit und gegen die Strömung des Flüssigerdgasstroms auf einem Messpfad ausgesandten und empfangenen Ultraschallsignalen beruht darauf, dass die Laufzeit eines Ultraschallsignals auf einem Messpfad mit vorgegebener Länge bei Ausbreitung gegen die Strömung eines Fluids länger ist als bei Ausbreitung mit der Strömung des Fluids. Aus der Laufzeit bzw. der Laufzeitdifferenz der jeweiligen Ultraschallsignale lässt sich nicht nur die Strömungsgeschwindigkeit ermitteln, sondern zusätzlich auch die Schallgeschwindigkeit des untersuchten Fluids.

Der Erfindung nutzt aus, dass bei Flüssigerdgas die chemische Zusammensetzung zumindest teilweise bekannt ist. Demnach ist bekannt, welche Bestandteile in relevanter Menge im Flüssigerdgas vorhanden sind, und welche Unter- und Obergrenzen für die jeweiligen Mengenanteile dieser Bestandteile zu erwarten sind. Die Bestandteile von Flüssigerdgas sind im Wesentlichen Methan ($CH_4$), Ethan ($C_2H_6$), Propan ($C_3H_6$) sowie höhere Alkane ($C_{4+}$) sowie Stickstoff ($N_2$). Wasserdampf ($H_2O$) und Kohlendioxid ($CO_2$) sind in Flüssigerdgas zumindest weitgehend nicht mehr enthalten.

Es hat sich gezeigt, dass es möglich ist, den Brennwert des Flüssigerdgasstroms auf der Grundlage von nur zwei Eingangsgrößen hinreichend genau zu beschreiben, wenn hierfür eine Modellfunktion verwendet wird, welche auf einem Datensatz basiert, welcher für eine Mehrzahl von unterschiedlichen Zusammensetzungen von Flüssigerdgas den jeweiligen Brennwert angibt, und zwar insbesondere in Abhängigkeit von den beiden genannten Eingangsgrößen.

Konkret kann bei der vorstehend genannten Messvorrichtung der volumenbezogene Brennwert mittels eines Modells in Abhängigkeit von der Schallgeschwindigkeit und der Temperatur des Flüssigerdgasstroms ermittelt werden. Die in diesem Modell verwendete Modellfunktion wird somit für einen Datensatz erzeugt, welcher für eine jeweilige bekannte Zusammensetzung den volumenbezogenen Brennwert in Abhängigkeit von zumindest der Schallgeschwindigkeit und der Temperatur angibt.

Der Begriff "zumindest auf der Grundlage der Schallgeschwindigkeit und der Temperatur" ist so zu verstehen, dass ggf. auch noch eine oder mehrere weitere Eingangsgrößen, insbesondere zusätzlich auch der Druck des Flüssigerdgasstroms, berücksichtigt werden können. Der Einfluss des Drucks ist jedoch gering und kann daher unter Inkaufnahme eines geringfügig erhöhten Messfehlers auch vernachlässigt werden.

Mit dem vorgängig angepassten Modell kann im Messprozess für ein beliebiges gemessenes Wertepaar der Schallgeschwindigkeit und der Temperatur der volumenbezogene Brennwert und aus diesem durch Multiplikation mit dem gemessenen Volumenstrom der resultierende Energiemengenstrom, also eine pro Zeiteinheit transportierte Energie oder Energiemenge berechnet werden.

Der Vorteil der erfindungsgemäßen Messvorrichtung besteht darin, dass eine genaue Kenntnis der Zusammensetzung des Flüssigerdgasstroms nicht erforderlich ist. Es ist ausreichend, für eine Mehrzahl von unterschiedlichen Zusammensetzungen den Brennwert rechnerisch (oder auch experimentell) zu ermitteln. Das Modell bzw. die Modellfunktion ermöglicht es dann, unter Kenntnis der Schallgeschwindigkeit und der Temperatur den Brennwert auch für eine solche Zusammensetzung von Flüssigerdgas zu ermitteln, welche nicht Bestandteil des Datensatzes ist.

Erfindungsgemäß ist die Modellfunktion hier ein Interpolationspolynom, welches durch Interpolation einer Vielzahl von in dem Datensatz enthaltenen Stützpunkten ermittelt ist, wobei die Stützpunkte zumindest für eine jeweilige Schallgeschwindigkeit und eine jeweilige Temperatur einen rechnerisch und/oder experimentell ermittelten volumenbezogenen Brennwert angeben. Die Polynomfunktion wird somit durch einen mathematischen Fit an die verschiedenen Stützpunkte des Datensatzes angepasst, um die Koeffizienten der Polynomfunktion zu bestimmen. Die Stützstellen der Stützpunkte des Datensatzes sind die Schallgeschwindigkeit und die Temperatur, bevorzugt auch der Druck. Die Stützwerte der Stützpunkte sind die jeweils zugeordneten volumenbezogenen Brennwerte. Durch Anwendung des Interpolationspolynoms als Modellfunktion mit der Schallgeschwindigkeit und der Temperatur als Eingangsgrößen kann also der volumenbezogene Brennwert in der Auswerteeinheit berechnet werden. Sofern der Druck berücksichtigt werden soll, muss er nicht zwingend in die Modellfunktion einfließen, d.h. er muss kein weiteres Argument der Modellfunktion bilden, sondern kann auch in Form eines Korrekturfaktors berücksichtigt werden.

Gemäß einer weiteren bevorzugten Ausführungsform ist das Interpolationspolynom durch die Gleichung

$$H_V = a_{00} + a_{10} \cdot c + a_{01} \cdot T + a_{20} \cdot c^2 + a_{11} \cdot c \cdot T + a_{02} \cdot T^2$$

bestimmt, wobei $H_V$ der volumenbezogene Brennwert des Flüssigerdgasstroms, c die Schallgeschwindigkeit des Flüssigerdgasstroms, $T$ die Temperatur des Flüssigerdgasstroms und $a_{ij}$ Koeffizienten sind.

Eine weitere erfindungsgemäße Messvorrichtung zum Messen eines mittels eines Flüssigerdgasstroms transportierten Energiemengenstroms umfasst einen Massendurchflussmesser, welcher zum Messen des Massenstroms und der Dichte des Flüssigerdgasstroms auf der Grundlage des Coriolis-Prinzips eingerichtet ist, einen Temperatursensor, welcher zum Messen der Temperatur des Flüssigerdgasstroms eingerichtet ist, und eine Auswerteeinheit, welche mit dem Massendurchflussmesser und dem Temperatursensor verbunden ist, um jeweilige Messwerte für den Massenstrom, die Dichte und die Temperatur zu empfangen, wobei die Auswerteeinheit dazu eingerichtet ist, zumindest auf der Grundlage der Dichte und der Temperatur mittels einer Modellfunktion den massebezogenen Brennwert des Flüssigerdgasstroms zu ermitteln, und auf der Grundlage des ermittelten Massenstroms und des ermittelten massebezogenen Brennwerts den transportierten Energiemengenstrom zu ermitteln, wobei die Modellfunktion basierend auf einem Datensatz bestimmt ist, welcher für eine Mehrzahl von unterschiedlichen Zusammensetzungen von Flüssigerdgas den massebezogenen Brennwert bei einer jeweiligen Zusammensetzung angibt.

Auch die weitere erfindungsgemäße Messvorrichtung kann beispielsweise in oder an einer Rohrleitung angeordnet sein. Der ermittelte Energiemengenstrom kann dann zum Beispiel von einer geeigneten Ausgabeeinheit angezeigt werden, zum Beispiel in einem Speicher zur weiteren Verwendung abgelegt werden oder gleich an eine Verarbeitungs- und/oder Verrechnungseinheit weitergeleitet werden.

Diese weitere erfindungsgemäße Messvorrichtung basiert auf dem gleichen erfindungsgemäßen Prinzip, den Brennwert des Flüssigerdgasstroms mittels einer Modellfunktion zu ermitteln. Im Unterschied zu der vorgenannten Messvorrichtung kommt hier anstelle der Volumenstromermittlung mittels einer Ultraschallmesseinrichtung ein nach dem Coriolis-Prinzip arbeitender Massendurchflussmesser zum Einsatz, welcher zusätzlich auch die Dichte des Flüssigerdgasstroms ermitteln kann. Die Funktion eines derartigen Coriolis-Massendurchflussmessers beruht zum Beispiel darauf, einen gekrümmten Rohrabschnitt, der von dem zu messenden Massenstrom durchströmt ist, in Schwingung zu versetzen und das Schwingungsverhalten messtechnisch zu analysieren. Bei einer Ausgestaltung weist ein Rohrbogen zwei Schenkel auf, welche ohne Durchfluss phasengleich schwingen. Falls jedoch in dem Rohrbogen ein Durchfluss herrscht, entsteht zwischen beiden Schenkeln aufgrund der Corioliskraft eine Phasenverschiebung, die zur Bestimmung des Massenstroms entsprechend ausgewertet werden kann. Die Frequenz, mit welcher der Rohrbogen schwingt, ist proportional zur Masse des im Rohr befindlichen Stoffes, so dass durch Auswertung der Frequenz der Rohrbogenschwingung auch die Dichte des Stoffes bestimmt werden kann.

Mit dem vorgängig angepassten Modell kann die Auswerteeinheit im Messprozess für ein beliebiges gemessenes Wertepaar der Dichte und der Temperatur der massebezogene Brennwert ermitteln und durch Multiplikation mit dem gemessenen Massenstrom der resultierende Energiemengenstrom berechnen. Auch bei dieser Variante der Erfindung kann der Brennwert des Flüssigerdgasstroms nicht nur ausschließlich auf der Grundlage der Dichte und der Temperatur ermittelt werden, sondern zusätzlich auch auf der Grundlage des Druckes des Flüssigerdgasstroms. Da der Einfluss des Druckes jedoch auch hier gering ist, kann er auch vernachlässigt werden.

Erfindungsgemäß ist die Modellfunktion hier ein Interpolationspolynom, welches durch Interpolation einer Vielzahl von in dem Datensatz enthaltenen Stützpunkten ermittelt ist, wobei die Stützpunkte für eine jeweilige Dichte und eine jeweilige Temperatur einen rechnerisch und/oder experimentell ermittelten massebezogenen Brennwert angeben. Das Interpolationspolynom wird durch einen mathematischen Fit an die Stützpunkte angepasst, um dessen Koeffizienten zu bestimmen. Die Eingangsgrößen der Modellfunktion sind somit die Dichte und die Temperatur des Flüssigerdgasstroms, bevorzugt auch der Druck. Alternativ muss der Druck jedoch nicht zwingend in die Modellfunktion einfließen, sondern kann in Form eines Korrekturfaktors berücksichtigt werden.

Gemäß einer weiteren bevorzugten Ausführungsform der weiteren Messvorrichtung ist das Interpolationspolynom durch die Gleichung

$$H_M = b_{00} + b_{10} \cdot \rho + b_{01} \cdot T + b_{20} \cdot \rho^2 + b_{11} \cdot \rho \cdot T + b_{02} \cdot T^2$$

bestimmt, wobei $H_M$ der massebezogene Brennwert des Flüssigerdgasstroms, $\rho$ die Dichte des Flüssigerdgasstroms, $T$ die Temperatur des Flüssigerdgasstroms und $b_{ij}$ Koeffizienten sind.

Gemäß bevorzugten Ausführungsformen der vorstehend genannten erfindungsgemäßen oder bevorzugten Messvorrichtungen umfasst der Datensatz für eine Mehrzahl von unterschiedlichen vorbestimmten Zusammensetzungen von Flüssigerdgas eine jeweilige Gruppe von mehreren Stützpunkten. Eine Gruppe von Stützpunkten für eine jeweilige vorbestimmte, aus mehreren Bestandteilen bestehende Zusammensetzung des Flüssigerdgasstroms kann beispielsweise auf einer gegebenenfalls vorab durchgeführten oder früher durchgeführten Analyse einer Flüssiggasprobe basieren, die aus einer bestimmten Förderquelle entnommen ist. Wie nachfolgend noch näher erläutert wird, ist es jedoch auch möglich, Stützpunkte für künstlich definierte Zusammensetzungen zu generieren, welche sich sinnvollerweise qualitativ und quantitativ innerhalb der bei real vorkommenden Flüssigerdgas-Zusammensetzungen vorhandenen Grenzen bewegen. Die Stützpunkte für eine jeweilige Gruppe können beispielsweise dadurch erzeugt werden, dass für die jeweilige vorbestimmte Zusammensetzung für verschiedene Temperaturen als Stützstellen die Schallgeschwindigkeit und der zugehörige volumenbezogene Brennwert bzw. die Dichte und der zugehörige massebezogene Brennwert berechnet werden.

Gemäß einer weiteren Ausführungsform einer der vorstehend genannten erfindungsgemäßen oder bevorzugten Messvorrichtungen erfolgt eine Berechnung der Stützpunkte unter Verwendung des GERG-2008-Algorithmus, der Norm ISO-6578 (ISO 6578:2017, veröffentlicht Oktober 2017) und/oder der Norm ISO-6976 (ISO 6976:2016, veröffentlicht August 2016). Der genannte Algorithmus bzw. die genannten Normen enthalten präzise Anleitungen dafür, wie für eine bestimmte Flüssigerdgas-Zusammensetzung in Abhängigkeit von der Temperatur und ggf. auch dem Druck die jeweilige Schallgeschwindigkeit, die jeweilige Dichte, und der jeweilige volumenbezogene und/oder massebezogene Brennwert berechnet werden können. Der GERG-2008-Algorithmus ist zum Beispiel in der Publikation "Kunz, O. and W. Wagner, "The GERG-2008 Wide-Range Equation of State for Natural Gases and Other Mixtures: An Expansion of GERG-2004", J. Chem. Eng. Data, 57 (11), 2012, pp. 3032-3091″ ausführlich beschrieben.

Die Erfindung bezieht sich ferner auf ein Verfahren zum Messen eines mittels eines Flüssigerdgasstroms transportierten Energiemengenstroms, mit den Schritten Messen der Strömungsgeschwindigkeit und der Schallgeschwindigkeit des Flüssigerdgasstroms auf der Grundlage von ermittelten Laufzeiten von mit und gegen die Strömung des Flüssigerdgasstroms auf einem Messpfad ausgesandten und empfangenen Ultraschallsignalen; Messen der Temperatur des Flüssigerdgasstroms; Ermitteln des Volumenstromes des Flüssigerdgasstroms auf der Grundlage der Strömungsgeschwindigkeit und der Querschnittsfläche des Flüssigerdgasstroms; Ermitteln des volumenbezogenen Brennwerts des Flüssigerdgasstroms zumindest auf der Grundlage der Schallgeschwindigkeit und der Temperatur mittels einer Modellfunktion, wobei die Modellfunktion basierend auf einem Datensatz bestimmt ist, welcher für eine Mehrzahl von unterschiedlichen Zusammensetzungen von Flüssigerdgas den volumenbezogenen Brennwert einer jeweiligen Zusammensetzung angibt; und Ermitteln des transportierten Energiemengenstroms auf der Grundlage des ermittelten Volumenstroms und des ermittelten volumenbezogenen Brennwerts.

Die Erfindung bezieht sich weiterhin auch auf ein Verfahren zum Messen eines mittels eines Flüssigerdgasstroms transportierten Energiemengenstroms, mit den Schritten Messen des Massenstroms und der Dichte des Flüssigerdgasstroms auf der Grundlage des Coriolisprinzips; Messen der Temperatur des Flüssigerdgasstroms; Ermitteln des massebezogenen Brennwerts des Flüssigerdgasstroms zumindest auf der Grundlage der Dichte und der Temperatur mittels einer Modellfunktion, wobei die Modellfunktion basierend auf einem Datensatz bestimmt ist, welcher für eine Mehrzahl von unterschiedlichen Zusammensetzungen von Flüssigerdgas den massebezogenen Brennwert einer jeweiligen Zusammensetzung angibt; und Ermitteln des transportierten Energiemengenstroms auf der Grundlage des ermittelten Massenstroms und des ermittelten massebezogenen Brennwerts.

Die vorstehend mit Bezug auf die Messvorrichtungen beschriebenen Ausführungsformen, insbesondere die jeweiligen Ermittlungen der Modellfunktion als ein Interpolationspolynom sowie die konkreten Ausgestaltungen der Interpolationspolynome, stellen in analoger Weise erfindungsgemäße bzw. bevorzugte Ausgestaltungen der erfindungsgemäßen Verfahren dar.

Ein gemeinsamer Vorteil der erfindungsgemäßen Messvorrichtungen und Verfahren besteht darin, dass zusätzlich zu den ohnehin notwendigen Durchflussmessern lediglich noch ein Temperatursensor erforderlich ist. Die zusätzlich zu der Temperatur für eine Brennwertbestimmung notwendige weitere Eingangsgröße, d.h. die Schallgeschwindigkeit bzw. die Dichte, wird von dem jeweiligen Durchflussmesser sozusagen als "Nebenprodukt" zu der eigentlichen Messgröße, d.h. dem Volumen- bzw. dem Massenstrom, bereitgestellt. Dadurch kann der Aufwand für die Sensorik klein gehalten werden.

Weitere Vorteile ergeben sich aus der folgenden Zeichnungsbeschreibung. In den Zeichnungen sind Ausführungsbeispiele der Erfindung dargestellt.

Es zeigt:

Fig. 1    ein Blockdiagramm einer Messvorrichtung gemäß einem ersten Ausführungsbeispiel,

Fig. 2    ein Blockdiagramm einer Messvorrichtung gemäß einem zweiten Ausführungsbeispiel, und

Fig. 3    ein dreidimensionales Diagramm einer Modellfunktion für die Messvorrichtung gemäß Fig. 1.

Im Folgenden werden gleiche oder gleichartige Elemente mit den gleichen Bezugszeichen bezeichnet.

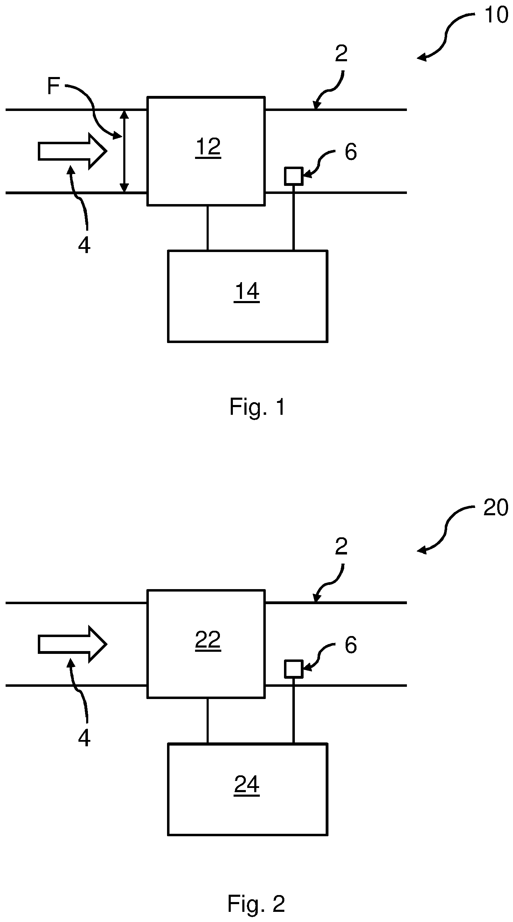

In Fig. 1 und 2 sind schematisch beispielhafte Messvorrichtungen 10, 20 dargestellt, welche an bzw. in einer jeweiligen Rohrleitung 2 angeordnet sind, welche von einem Flüssigerdgasstrom 4 durchströmt wird.

Die Messvorrichtung 10 gemäß Fig. 1 umfasst eine Ultraschallmesseinrichtung 12, welche an der Rohrleitung 2 angeordnet ist und zum Messen der Strömungsgeschwindigkeit des Flüssigerdgasstroms 4 und der Schallgeschwindigkeit in dem Flüssigerdgasstrom 4 auf der Grundlage von ermittelten Laufzeiten von mit und gegen die Strömung des Flüssigerdgasstroms 4 auf einem Messpfad ausgesandten und empfangenen Ultraschallsignalen eingerichtet ist. Die Messvorrichtung 10 umfasst weiterhin einen an der Rohrleitung 2 angeordneten Temperatursensor 6, welcher zum Messen der Temperatur des Flüssigerdgasstroms 4 eingerichtet ist. Weiterhin umfasst die Messvorrichtung 10 eine Auswerteeinheit 14, welche mit der Ultraschallmesseinrichtung 12 und dem Temperatursensor 6 verbunden ist, um jeweilige Messwerte für die Strömungsgeschwindigkeit, die Schallgeschwindigkeit und die Temperatur zu empfangen.

Die Auswerteeinheit 14 ist dazu eingerichtet, auf der Grundlage der Strömungsgeschwindigkeit und der Querschnittsfläche F des Flüssigerdgasstroms 4, die im Ausführungsbeispiel durch die Querschnittsfläche der Rohrleitung 2 bestimmt ist, den Volumenstrom des Flüssigerdgasstroms 4 zu ermitteln.

Die Messvorrichtung 20 gemäß Fig. 2 umfasst einen an der Rohrleitung 2 angeordneten Massendurchflussmesser 22, welcher zum Messen des Massenstroms und der Dichte des Flüssigerdgasstroms 4 auf der Grundlage des Coriolis-Prinzips eingerichtet ist. Die Messvorrichtung 20 umfasst ebenfalls einen Temperatursensor 6, welcher zum Messen der Temperatur des Flüssigerdgasstroms 4 eingerichtet ist. Schließlich umfasst die Messvorrichtung 20 eine Auswerteeinheit 22, welche mit dem Massendurchflussmesser 22 und dem Temperatursensor 6 verbunden ist, um jeweilige Messwerte für den Massenstrom, die Dichte und die Temperatur zu empfangen.

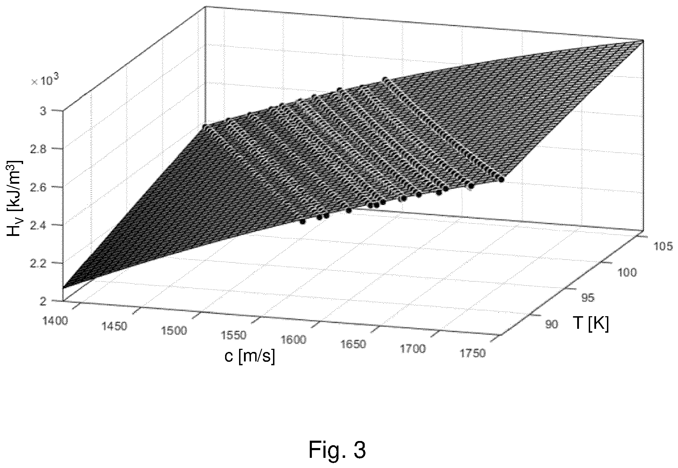

Mit Bezug auf Fig. 1 und 3 wird nun die Funktionsweise der Messvorrichtung 10 näher erläutert.

Zunächst werden einige Grundlagen für die Ermittlung der Energie in einer Menge von Flüssigerdgas bzw. die Ermittlung des Energiemengenstroms, der mittels eines Flüssigerdgasstroms transportiert wird, erläutert. Die folgenden Betrachtungen beziehen sich jeweils auf eine Energiemenge oder Energie E, ein Volumen V und eine Masse M. Es versteht sich, dass die Beziehungen analog auch auf die abgeleiteten Größen eines Energiemengenstroms, eines Volumenstroms und eines Massenstroms anwenden lassen, da ein Energiemengenstrom als Energie oder Energiemenge pro Zeiteinheit, ein Volumenstrom als ein Volumen pro Zeiteinheit und ein Massenstrom als eine Masse pro Zeiteinheit definiert ist. Dementsprechend lässt sich mit der erfindungsgemäßen Messvorrichtung wiederum durch Integration eines gemessenen transportierten Energiemengenstroms über die Zeit auch eine in dieser Zeit transportierte Energie oder Energiemenge ermitteln. Insofern können die Messvorrichtungen bzw. die Verfahren auch die Funktion von Energiemengenzählern umfassen.

Allgemein lässt sich die Energie $E$, die bei der Verbrennung einer einem Volumen $V_{LNG}$ von Flüssigerdgas entsprechenden Gasmenge freigesetzt wird, durch die Gleichung

$$E = V_{LNG} \cdot \rho_{LNG}(T, p, x) \cdot H_{M,LNG}(x) \qquad (1)$$

beschreiben. Die Energie $E$ wird hierbei bezogen auf die Verbrennung unter Normbedingungen, d.h. auf die Verbrennung von Gas bei einer Temperatur von 20°C und einem Druck von 0 bar angegeben. Das Volumen $V_{LNG}$ des Flüssigerdgases bezieht sich ebenso wie dessen Dichte $\rho_{LNG}$ auf die herrschenden Transportbedingungen, welche durch den Druck $p$ und die Temperatur $T$ des Flüssigerdgases bestimmt sind. Weiterhin hängt die Dichte $\rho_{LNG}$ ebenso wie der massebezogene Brennwert $H_{M,\,LNG}$ von der Zusammensetzung des untersuchten Flüssigerdgases ab, wobei diese Abhängigkeit von der chemischen Zusammensetzung des Flüssigerdgases durch das Argument $x$ veranschaulicht wird. Der massebezogene Brennwert $H_{M,\,LNG}$ bezieht sich auf die Energie, die bei der Verbrennung einer bestimmten Masse bei den oben definierten Normbedingungen (20°C, 0 bar) freigesetzt wird.

In Gleichung (1) sind ggf. entstehende Energieverluste, die sich bei der Übertragung oder durch Verdampfung von Flüssigerdgas ergeben, nicht berücksichtigt, da deren messtechnische Erfassung mit erheblichen Schwierigkeiten verbunden ist. Etwaige Übertragungsverluste können vernachlässigt oder ggf. summarisch bzw. schätzungsbasiert berücksichtigt werden.

Die Energie $E$, die bei der Verbrennung von regasifiziertem Flüssigerdgas freigesetzt wird, ergibt sich aus der Gleichung

$$\frac{E(T_1,p_1,x)}{[MJ]} = \frac{V(T_1,p_1)}{[m^3]} \cdot \frac{\rho(T_1,p_1,x)}{[kg/m^3]} \cdot \frac{H_M(T_1,p_1,x)}{[MJ/kg]} \qquad (2)$$

wobei $T_1$ und $p_1$ die Temperatur und den Druck bei Verbrennungsbedingungen des (gasförmigen) Erdgases, z.B. die vorstehend erwähnten Normbedingungen, und $T_2$ und $p_2$ die Temperatur und den Druck bei Transportbedingungen des (kryogenen) Flüssigerdgases bezeichnen.

Gemäß dem Gesetz der Masseerhaltung ergibt sich folgende Gleichung:

$$\frac{V(T_1,p_1)}{[m^3]} \cdot \frac{\rho(T_1,p_1,x)}{[kg/m^3]} = \frac{V(T_2,p_2)}{[m^3]} \cdot \frac{\rho(T_2,p_2,x)}{[kg/m^3]} \qquad (3)$$

Damit lässt sich Gleichung (2) umformulieren zu:

$$\frac{E(T_1,p_1,x)}{[MJ]} = \frac{V(T_2,p_2)}{[m^3]} \cdot \frac{\rho(T_2,p_2,x)}{[kg/m^3]} \cdot \frac{H_M(T_1,p_1,x)}{[MJ/kg]} \qquad (4)$$

Der Wert für $V(T_2, p_2)$ wird in der Auswerteeinheit 14 auf der Grundlage der von der Ultraschallmesseinrichtung 12 unter den genannten Transportbedingungen ermittelten Strömungsgeschwindigkeit und der Querschnittsfläche F des Flüssigerdgasstroms 4 ermittelt. Somit muss für die Ermittlung der Energie $E$ lediglich noch das Produkt aus der Dichte $\rho$ des Flüssigerdgases bei Transportbedingungen (d.h. bei $T_2$, $p_2$) und dem massebezogenen Brennwert $H_M$ bezogen auf eine Verbrennung unter Normbedingungen ermittelt werden. Dieses Produkt stellt den volumenbezogenen Brennwert $H_V$ des Flüssigerdgases dar:

$$\frac{H_V(T_2,p_2,x)}{[MJ/m^3]} = \frac{\rho(T_2,p_2,x)}{[kg/m^3]} \cdot \frac{H_M(T_1,p_1,x)}{[MJ/kg]} \qquad (5)$$

Der volumenbezogene Brennwert $H_V(T_2, p_2)$ bezieht sich somit auf das Volumen und die Dichte des Flüssigerdgases unter Transportbedingungen, d.h. auf die kryogene Flüssigphase. Somit gibt der volumenbezogene Brennwert $H_V(T_2, p_2)$ die Energie pro Volumen der Flüssigphase wieder, während üblicherweise ein volumenbezogener Brennwert in Bezug auf eine Verbrennung in der gasförmigen Phase bei Normbedingungen angegeben wird, also für eine Energie pro Volumen der Gasphase.

Sofern die Zusammensetzung des zu messenden Flüssigerdgasstroms bekannt wäre, könnte der volumenbezogene Brennwert beispielsweise aus einer Datenbank entnommen und in die Berechnungen des Energiemengenstroms einbezogen werden. Für unbekannte oder teilweise unbekannte Flüssigerdgas-Zusammensetzungen ist dies jedoch nicht möglich.

Der Erfindung liegt die überraschende Erkenntnis zugrunde, dass es einen gut definierten Zusammenhang zwischen der Schallgeschwindigkeit $c$ und der Temperatur $T$ des Flüssigerdgases einerseits und dem volumenbezogenen Brennwert $Hv$ des Flüssigerdgases andererseits gibt.

Dieser Zusammenhang ist in Fig. 3 dargestellt. Die durch gefüllte Kreise repräsentierten Stützpunkte definieren für verschiedene Werte der Temperatur $T$ und der Schallgeschwindigkeit $c$ zugeordnete Werte für den volumenbezogenen Brennwert $H_V$ des Flüssigerdgases. Die dort erkennbaren diagonal verlaufenden Reihen von Stützpunkten repräsentieren jeweils eine definierte chemische Zusammensetzung des Flüssigerdgases.

Die einen Datensatz bildenden Stützpunkte werden vorteilhafterweise mittels etablierter Algorithmen rechnerisch aus verschiedenen Referenz-Flüssigerdgas-Zusammensetzungen ermittelt. So ist beispielsweise in der Publikation "GIIGNL Annual Report 2018", veröffentlicht von der "International Group of Liquefied Natural Gas Importers", abgerufen am 14. Dezember 2022 unter:https://giignl.org/document/giignl-2018-annual-report/ eine Datensammlung für 22 aus verschiedenen Förderstätten stammende Flüssigerdgas-Zusammensetzungen enthalten. Diese Daten finden sich auch in der Norm ISO-23306 (ISO 23306:2020, veröffentlicht Oktober 2020). Mit Hilfe des sogenannten GERG-2008-Algorithmus, welcher ausführlich zum Beispiel in dem Dokument "Kunz, O. and W. Wagner, "The GERG-2008 Wide-Range Equation of State for Natural Gases and Other Mixtures: An Expansion of GERG-2004", J. Chem. Eng. Data, 57 (11), 2012, pp. 3032-3091" beschrieben ist, und/oder der Norm ISO-6578 (ISO 6578:2017, veröffentlicht Oktober 2017) können für verschiedene Referenzzusammensetzungen die Dichte, die molare Masse und die Schallgeschwindigkeit bestimmt werden. Die Berechnung des massebezogenen Brennwerts $H_M$ erfolgt bevorzugt gemäß dem in der Norm ISO-6976 (ISO 6976:2016, veröffentlicht August 2016) beschriebenen Verfahren.

Zur Ermittlung der Stützpunkte für eine jeweilige Zusammensetzung kann beispielsweise ein Temperaturbereich vorgegeben werden, für den die jeweiligen Werte berechnet werden. Beispielsweise kann ein Temperaturintervall von 10°C ausgehend von dem Siedepunkt der jeweiligen Zusammensetzung als obere Grenze des Temperaturintervalls gewählt werden, welches in geeignete Temperaturschritte, beispielsweise in Schritte von 1°C, unterteilt wird.

Es hat sich gezeigt, dass die rechnerisch oder experimentell ermittelten Stützpunkte sehr gut mit einem Interpolationspolynom als Modellfunktion angepasst werden können:

$$H_V = a_{00} + a_{10} \cdot c + a_{01} \cdot T + a_{20} \cdot c^2 + a_{11} \cdot c \cdot T + a_{02} \cdot T^2 \quad (6),$$

wobei $a_{ij}$ Anpassungskoeffizienten dieser Modellfunktion sind.

Durch Verwendung dieser Modellfunktion in der Auswerteeinheit 14 kann zumindest auf der Grundlage der gemessenen Schallgeschwindigkeit c und der gemessenen Temperatur T des Flüssigerdgasstroms der volumenbezogene Brennwert Hv des Flüssigerdgasstroms ermittelt werden. Auf der Grundlage des ermittelten Volumenstroms und des ermittelten volumenbezogenen Brennwerts $H_V$ kann anschließend der transportierte Energiemengenstrom ermittelt werden.

In Fig. 3 ist die Modellfunktion gemäß dem in Gleichung (6) beschriebenen Interpolationspolynom als schraffierte Fläche dargestellt.

Das mit Bezug auf die Messvorrichtung 10 von Fig. 1 und Fig. 3 beschriebene Messverfahren kann in analoger Weise in der Messvorrichtung 20 gemäß Fig. 2 angewandt werden, bei welcher ein Massenstrom des Flüssigerdgases mittels des Massendurchflussmessers 22 ermittelt wird. Es hat sich gezeigt, dass es auch zwischen der Dichte $\rho$ und der Temperatur T des Flüssigerdgases einerseits und dem massebezogenen Brennwert $H_M$ des Flüssigerdgases andererseits einen gut definierten Zusammenhang gibt.

Mit Hilfe der Messvorrichtung 20 kann die Energie E analog zu Gleichung (2) auf der Grundlage der Masse M des Flüssigerdgases gemäß der folgenden Gleichung ermittelt werden:

$$\frac{E(T_1, p_1, x)}{[MJ]} = \frac{M(T_1, p_1, x)}{[kg]} \cdot \frac{H_M(x)}{[MJ/kg]} \quad (7)$$

Gleichung (7) lässt sich unter Einbeziehung des Massenerhaltungsgesetzes auch schreiben als:

$$\frac{E(T_1, p_1, x)}{[MJ]} = \frac{M(T_2, p_2, x)}{[kg]} \cdot \frac{H_M(x)}{[MJ/kg]} \quad (8)$$

Die Größen $p_1$, $p_2$, $T_1$, $T_2$, x wurden bereits vorstehend mit Bezug auf die Messvorrichtung 10 gemäß Fig. 1 erläutert.

Um auf der Grundlage von Gleichung (8) die Energie bzw. den Energiemengenstrom zu berechnen, wird wiederum der massebezogene Brennwert $H_M$ mittels einer Modellfunktion ermittelt. Als Eingangsgrößen für die Modellfunktion werden die vom Massendurchflussmesser 22 gemessene Dichte $\rho$ des Flüssigerdgasstroms sowie dessen von dem Temperatursensor 6 gemessene Temperatur T verwendet. Als Modellfunktion für den massebezogenen Brennwert $H_M$ wird das folgende Interpolationspolynom verwendet:

$$H_M = b_{00} + b_{10} \cdot \rho + b_{01} \cdot T + b_{20} \cdot \rho^2 + b_{11} \cdot \rho \cdot T + b_{02} \cdot T^2 \quad (9)$$

Die Anpassungskoeffizienten $b_{ij}$ können durch Anpassen des Interpolationspolynoms an einen Datensatz ermittelt werden, welcher Stützpunkte für verschiedene unterschiedliche chemische Zusammensetzungen von Flüssigerdgas umfasst. Die Stützpunkte des Datensatzes können mit Hilfe der bereits in Bezug auf das Ausführungsbeispiel von Fig. 1 erläuterten Algorithmen berechnet werden, wobei der GERG-2008-Algorithmus und/oder die Norm ISO-6578 für die Berechnung der Dichte und der molaren Masse und die Norm ISO-6976 für die Berechnung des Brennwerts verwendet werden kann.

Bei beiden Varianten der beschriebenen Messvorrichtungen 10, 20 bzw. der korrespondierenden Messverfahren ist es nicht zwingend, die Datensätze für die Anpassung des jeweiligen Interpolationspolynoms auf der Grundlage von realen chemischen Flüssigerdgas-Zusammensetzungen zu erzeugen. Vielmehr können auch Stützpunkte für verschiedene zufällig generierte Flüssigerdgas-Zusammensetzungen erzeugt werden. Vorteilhafterweise bewegen sich diese künstlich erzeugten Zusammensetzungen innerhalb der Grenzen für minimale und maximale Stoffmengenanteile, die anhand der in dem GIIGNL Annual Report 2018 bzw. der Norm ISO-23306 beschriebenen 22 realen Zusammensetzungen ermittelt wurden. Die Stoffmengenanteile der verschiedenen Bestandteile dieser Zusammensetzungen bewegen sich innerhalb der folgenden Grenzen:

- Methan: 87,3 bis 99,7 Mol-%
- Ethan: 0,09 bis 10,3 Mol-%
- Propan: 0,07 bis 3,3 Mol-%
- Butan und höhere Alkane: 0,01 bis 1,5 Mol-%
- Stickstoff ($N_2$): 0 bis 0,7 Mol-%

Die Dichte dieser Zusammensetzungen (in der Flüssigphase) bei -160°C variiert zwischen 421 und 467 kg/m$^3$.

Die bei der Ermittlung der Brennwerte $Hv$, $H_M$ gemäß der vorstehend erläuterten Methodik auftretenden Fehler liegen weit unter 1 %. Fehlereinflüsse ergeben sich insbesondere bei der rechnerischen Ermittlung der Schallgeschwindigkeit bzw. der Dichte der Referenz-Zusammensetzungen auf der Grundlage des GERG-2008-Modells, bei den Messungen der Schallgeschwindigkeit, der Dichte und der Temperatur und aufgrund einer Abweichung des tatsächlichen Drucks unter Transportbedingungen von einem angenommenen Referenzdruck.

Die Schätzfehler für die Brennwerte $Hv$, $H_M$ lassen sich weiter reduzieren, wenn zusätzlich der tatsächliche Druck des Flüssigerdgasstroms 4 berücksichtigt wird, was beispielsweise mit Hilfe einer erweiterten Modellfunktion oder durch Anwendung eines druckabhängigen Korrekturfaktors verwirklicht werden kann. Zur Messung des Drucks des Flüssigerdgasstroms 4 kann bei beiden Ausführungsbeispielen ein entsprechender, mit der Auswerteeinheit 14 verbundener Drucksensor (nicht dargestellt) in der Rohrleitung 2 vorgesehen werden.

Bezugszeichenliste

| | |
|---|---|
| 10, 20 | Messvorrichtung |
| 2 | Rohrleitung |
| 4 | Flüssigerdgas |
| 6 | Temperatursensor |
| 12 | Ultraschallmesseinrichtung |
| 14, 24 | Auswerteeinheit |
| 22 | Massendurchflussmesser |

| | |
|---|---|
| F | Querschnittsfläche |

**Patentansprüche**

**1.** Messvorrichtung (10) zum Messen eines mittels eines Flüssigerdgasstroms (4) transportierten Energiemengenstroms, mit

- einer Ultraschallmesseinrichtung (12), welche zum Messen der Strömungsgeschwindigkeit des Flüssigerdgasstroms (4) und der Schallgeschwindigkeit in dem Flüssigerdgasstrom (4) auf der Grundlage von ermittelten Laufzeiten von mit und gegen die Strömung des Flüssigerdgasstroms (4) auf einem Messpfad ausgesandten und empfangenen Ultraschallsignalen eingerichtet ist,
- einem Temperatursensor (6), welcher zum Messen der Temperatur des Flüssigerdgasstroms (4) eingerichtet ist, und
- einer Auswerteeinheit (14), welche mit der Ultraschallmesseinrichtung (12) und dem Temperatursensor (6) verbunden ist, um jeweilige Messwerte für die Strömungsgeschwindigkeit, die Schallgeschwindigkeit und die Temperatur zu empfangen,
wobei die Auswerteeinheit (14) dazu eingerichtet ist, zumindest auf der Grundlage der Strömungsgeschwindigkeit und der Querschnittsfläche (F) des Flüssigerdgasstroms (4) den Volumenstrom des Flüssigerdgasstroms (4) zu ermitteln, zumindest auf der Grundlage der Schallgeschwindigkeit und der Temperatur mittels einer Modellfunktion den volumenbezogenen Brennwert des Flüssigerdgasstroms (4) zu ermitteln, und auf der Grundlage des ermittelten Volumenstroms und des ermittelten volumenbezogenen Brennwerts den transportierten Energiemengenstrom zu ermitteln, **dadurch gekennzeichnet, dass**

die Modellfunktion basierend auf einem Datensatz bestimmt ist, welcher für eine Mehrzahl von unterschiedlichen Zusammensetzungen von Flüssigerdgas den volumenbezogenen Brennwert einer jeweiligen Zusammensetzung angibt,

und dass die Modellfunktion ein Interpolationspolynom ist, welches durch Interpolation einer Vielzahl von in dem Datensatz enthaltenen Stützpunkten ermittelt ist, wobei die Stützpunkte zumindest für eine jeweilige Schallgeschwindigkeit und eine jeweilige Temperatur einen rechnerisch und/oder experimentell ermittelten volumenbezogenen Brennwert angeben.

2. Messvorrichtung (10) nach Anspruch 1,
   **dadurch gekennzeichnet,**

   **dass** Interpolationspolynom durch die Gleichung

$$H_V = a_{00} + a_{10} \cdot c + a_{01} \cdot T + a_{20} \cdot c^2 + a_{11} \cdot c \cdot T + a_{02} \cdot T^2,$$

   bestimmt ist, wobei $H_V$ der volumenbezogene Brennwert des Flüssigerdgasstroms (4), c die Schallgeschwindigkeit des Flüssigerdgasstroms (4), $T$ die Temperatur des Flüssigerdgasstroms (4) und $a_{ij}$ Koeffizienten sind.

3. Messvorrichtung (20) zum Messen eines mittels eines Flüssigerdgasstroms (4) transportierten Energiemengenstroms, mit

   - einem Massendurchflussmesser (22), welcher zum Messen des Massenstroms und der Dichte des Flüssigerdgasstroms (4) auf der Grundlage des Coriolisprinzips eingerichtet ist,
   - einem Temperatursensor (6), welcher zum Messen der Temperatur des Flüssigerdgasstroms (4) eingerichtet ist, und
   - einer Auswerteeinheit (14), welche mit dem Massendurchflussmesser (22) und dem Temperatursensor (6) verbunden ist, um jeweilige Messwerte für den Massenstrom, die Dichte und die Temperatur zu empfangen, wobei die Auswerteeinheit (14) dazu eingerichtet ist, zumindest auf der Grundlage der Dichte und der Temperatur mittels einer Modellfunktion den massebezogenen Brennwert des Flüssigerdgasstroms (4) zu ermitteln, und auf der Grundlage des ermittelten Massenstroms und des ermittelten massebezogenen Brennwerts den transportierten Energiemengenstrom zu ermitteln, **dadurch gekennzeichnet, dass**
   die Modellfunktion basierend auf einem Datensatz bestimmt ist, welcher für eine Mehrzahl von unterschiedlichen Zusammensetzungen von Flüssigerdgas den massebezogenen Brennwert einer jeweiligen Zusammensetzung angibt,
   und dass die Modellfunktion ein Interpolationspolynom ist, welches durch Interpolation einer Vielzahl von in dem Datensatz enthaltenen Stützpunkten ermittelt ist, wobei die Stützpunkte für eine jeweilige Dichte und eine jeweilige Temperatur einen rechnerisch und/oder experimentell ermittelten massebezogenen Brennwert angeben.

4. Messvorrichtung (20) nach Anspruch 3,
   **dadurch gekennzeichnet,**

   **dass** Interpolationspolynom durch die Gleichung

$$H_M = b_{00} + b_{10} \cdot \rho + b_{01} \cdot T + b_{20} \cdot \rho^2 + b_{11} \cdot \rho \cdot T + b_{02} \cdot T^2$$

   bestimmt ist, wobei $H_M$ der massebezogene Brennwert des Flüssigerdgasstroms (4), $\rho$ die Dichte des Flüssigerdgasstroms (4), $T$ die Temperatur des Flüssigerdgasstroms (4) und $b_{ij}$ Koeffizienten sind.

5. Messvorrichtung (10, 20) nach einem der vorhergehenden Ansprüche,
   **dadurch gekennzeichnet,**
   **dass** der Datensatz für eine Mehrzahl von unterschiedlichen vorbestimmten Zusammensetzungen von Flüssigerdgas eine jeweilige Gruppe von mehreren Stützpunkten umfasst.

**6.** Messvorrichtung (10, 20) nach einem der vorhergehenden Ansprüche, **dadurch gekennzeichnet, dass** eine Berechnung der Stützpunkte unter Verwendung des GERG-2008-Algorithmus, der Norm ISO-6578 und/oder der Norm ISO-6976 erfolgt.

**7.** Messvorrichtung (10) nach einem der vorhergehenden Ansprüche, **dadurch gekennzeichnet, dass** die Messvorrichtung ferner einen mit der Auswerteeinheit (14) verbundenen Drucksensor umfasst, welcher zum Messen des Drucks des Flüssigerdgasstroms (4) eingerichtet ist, wobei die Auswerteeinheit (14) dazu eingerichtet ist, Messwerte für den Druck von dem Drucksensor zu empfangen und den Brennwert des Flüssigerdgasstroms (4) zusätzlich auf der Grundlage des Drucks zu ermitteln.

**8.** Verfahren zum Messen eines mittels eines Flüssigerdgasstroms (4) transportierten Energiemengenstroms, mit den Schritten:

Messen der Strömungsgeschwindigkeit und der Schallgeschwindigkeit des Flüssigerdgasstroms (4) auf der Grundlage von ermittelten Laufzeiten von mit und gegen die Strömung des Flüssigerdgasstroms (4) auf einem Messpfad ausgesandten und empfangenen Ultraschallsignalen,
Messen der Temperatur des Flüssigerdgasstroms (4),
Ermitteln des Volumenstromes des Flüssigerdgasstroms (4) auf der Grundlage der Strömungsgeschwindigkeit und der Querschnittsfläche (F) des Flüssigerdgasstroms (4),
Ermitteln des volumenbezogenen Brennwerts des Flüssigerdgasstroms (4) zumindest auf der Grundlage der Schallgeschwindigkeit und der Temperatur mittels einer Modellfunktion, wobei die Modellfunktion basierend auf einem Datensatz bestimmt ist, welcher für eine Mehrzahl von unterschiedlichen Zusammensetzungen von Flüssigerdgas den volumenbezogenen Brennwert einer jeweiligen Zusammensetzung angibt, und wobei die Modellfunktion ein Interpolationspolynom ist, welches durch Interpolation einer Vielzahl von in dem Datensatz enthaltenen Stützpunkten ermittelt ist, wobei die Stützpunkte zumindest für eine jeweilige Schallgeschwindigkeit und eine jeweilige Temperatur einen rechnerisch und/oder experimentell ermittelten volumenbezogenen Brennwert angeben, und
Ermitteln des transportierten Energiemengenstroms auf der Grundlage des ermittelten Volumenstroms und des ermittelten volumenbezogenen Brennwerts.

**9.** Verfahren zum Messen eines mittels eines Flüssigerdgasstroms (4) transportierten Energiemengenstroms, mit den Schritten:

Messen des Massenstroms und der Dichte des Flüssigerdgasstroms (4) auf der Grundlage des Coriolisprinzips,
Messen der Temperatur des Flüssigerdgasstroms (4),
Ermitteln des massebezogenen Brennwerts des Flüssigerdgasstroms (4) zumindest auf der Grundlage der Dichte und der Temperatur mittels einer Modellfunktion, wobei die Modellfunktion basierend auf einem Datensatz bestimmt ist, welcher für eine Mehrzahl von unterschiedlichen Zusammensetzungen von Flüssigerdgas den massebezogenen Brennwert einer jeweiligen Zusammensetzung angibt, und wobei die Modellfunktion ein Interpolationspolynom ist, welches durch Interpolation einer Vielzahl von in dem Datensatz enthaltenen Stützpunkten ermittelt ist, wobei die Stützpunkte für eine jeweilige Dichte und eine jeweilige Temperatur einen rechnerisch und/oder experimentell ermittelten massebezogenen Brennwert angeben, und
Ermitteln des transportierten Energiemengenstroms auf der Grundlage des ermittelten Massenstroms und des ermittelten massebezogenen Brennwerts.

## Claims

**1.** A measurement apparatus (10) for measuring an energy quantity flow transported by means of a liquefied natural gas flow (4), comprising

- an ultrasonic measurement device (12) which is configured to measure the flow velocity of the liquefied natural gas flow (4) and the sound velocity in the liquefied natural gas flow (4) based on determined transit times of ultrasonic signals transmitted and received with and against the flow of the liquefied natural gas flow (4) on a measurement path;
- a temperature sensor (6) which is configured to measure the temperature of the liquefied natural gas flow (4); and
- an evaluation unit (14) which is connected to the ultrasonic measurement device (12) and the temperature sensor (6) to receive respective measurement values for the flow velocity, the sound velocity and the temperature, wherein the evaluation unit (14) is configured to determine the volume flow of the liquefied natural gas flow (4) at least based on the flow velocity and the cross-sectional area (F) of the liquefied natural gas flow (4), to determine the volume-related calorific value of the liquefied natural gas flow (4) at least based on the sound velocity and the temperature by means of a model function, and to determine the transported energy quantity flow based on the determined volume flow and the determined volume-related calorific value, **characterized in that**
the model function is determined based on a data set that specifies the volume-related calorific value of a respective composition for a plurality of different compositions of liquefied natural gas,
and **in that** the model function is an interpolation polynomial that is determined by interpolation of a plurality of support points included in the data set, with the support points specifying a volume-related calorific value determined by calculation and/or experimentally at least for a respective sound velocity and a respective temperature.

2. A measurement apparatus (10) according to claim 1,
**characterized in that**

the interpolation polynomial is determined by the equation

$$H_V = a_{00} + a_{10} \cdot c + a_{01} \cdot T + a_{20} \cdot c^2 + a_{11} \cdot c \cdot T + a_{02} \cdot T^2,$$

where $H_V$ is the volume-related calorific value of the liquefied natural gas flow (4), c is the sound velocity of the liquefied natural gas flow (4), $T$ is the temperature of the liquefied natural gas flow (4), and $a_{ij}$ are coefficients.

3. A measurement apparatus (20) for measuring an energy quantify flow transported by means of a liquefied natural gas flow (4), comprising

- a mass flow meter (22) which is configured to measure the mass flow and the density of the liquefied natural gas flow (4) based on the Coriolis principle;
- a temperature sensor (6) which is configured to measure the temperature of the liquefied natural gas flow (4); and
- an evaluation unit (14) which is connected to the mass flow meter (22) and the temperature sensor (6) to receive respective measurement values for the mass flow, the density and the temperature,
wherein the evaluation unit (14) is configured to determine the mass-related calorific value of the liquefied natural gas flow (4) at least based on the density and the temperature by means of a model function, and to determine the transported energy quantity flow based on the determined mass flow and the determined mass-related calorific value, **characterized in that**
the model function is determined based on a data set that specifies the mass-related calorific value of a respective composition for a plurality of different compositions of liquefied natural gas,
and **in that** the model function is an interpolation polynomial that is determined by interpolation of a plurality of support points included in the data set, with the support points specifying a mass-related calorific value determined by calculation and/or experimentally for a respective density and a respective temperature.

4. A measurement apparatus (20) according to claim 3,
**characterized in that**

the interpolation polynomial is determined by the equation

$$H_M = b_{00} + b_{10} \cdot \rho + b_{01} \cdot T + b_{20} \cdot \rho^2 + b_{11} \cdot \rho \cdot T + b_{02} \cdot T^2,$$

where $H_M$ is the mass-related calorific value of the liquefied natural gas flow (4), $\rho$ is the density of the liquefied natural gas flow (4), $T$ is the temperature of the liquefied natural gas flow (4), and $b_{ij}$ are coefficients.

5. A measurement apparatus (10, 20) according to any one of the preceding claims,
**characterized in that**
the data set comprises a respective group of a plurality of support points for a plurality of different predetermined compositions of liquefied natural gas.

**6.** A measurement apparatus (10, 20) according to any one of the preceding claims, **characterized in that** a calculation of the support points takes place using the GERG-2008 algorithm, the standard ISO-6578 and/or the standard ISO-6976.

**7.** A measurement apparatus (10) according to any one of the preceding claims, **characterized in that** the measurement apparatus further comprises a pressure sensor which is connected to the evaluation unit (14) and which is configured to measure the pressure of the liquefied natural gas flow (4), with the evaluation unit (14) being configured to receive measurement values for the pressure from the pressure sensor and to additionally determine the calorific value of the liquefied natural gas flow (4) based on the pressure.

**8.** A method for measuring an energy quantify flow transported by means of a liquefied natural gas flow (4), comprising the steps:

measuring the flow velocity and the sound velocity of the liquefied natural gas flow (4) based on determined transit times of ultrasonic signals transmitted and received with and against the flow of the liquefied natural gas flow (4) on a measurement path;
measuring the temperature of the liquefied natural gas flow (4);
determining the volume flow of the liquefied natural gas flow (4) based on the flow velocity and the cross-sectional area (F) of the liquefied natural gas flow (4);
determining the volume-related calorific value of the liquefied natural gas flow (4) at least based on the sound velocity and the temperature by means of a model function, wherein the model function is determined based on a data set that specifies the volume-related calorific value of a respective composition for a plurality of different compositions of liquefied natural gas, and wherein the model function is an interpolation polynomial that is determined by interpolation of a plurality of support points included in the data set, with the support points specifying a volume-related calorific value determined by calculation and/or experimentally at least for a respective sound velocity and a respective temperature; and
determining the transported energy quantity flow based on the determined volume flow and the determined volume-related calorific value.

**9.** A method for measuring an energy quantity flow transported by means of a liquefied natural gas flow (4), comprising the steps:

measuring the mass flow and the density of the liquefied natural gas flow (4) based on the Coriolis principle;
measuring the temperature of the liquefied natural gas flow (4);
determining the mass-related calorific value of the liquefied natural gas flow (4) at least based on the density and the temperature by means of a model function, wherein the model function is determined based on a data set that specifies the mass-related calorific value of a respective composition for a plurality of different compositions of liquefied natural gas, and wherein the model function is an interpolation polynomial that is determined by interpolation of a plurality of support points included in the data set, with the support points specifying a mass-related calorific value determined by calculation and/or experimentally for a respective density and a respective temperature; and
determining the transported energy quantity flow based on the determined mass flow and the determined mass-related calorific value.

**Revendications**

**1.** Dispositif de mesure (10) pour mesurer un débit énergétique transporté par un flux de gaz naturel liquéfié (4), comprenant

- un dispositif de mesure à ultrasons (12) conçu pour mesurer la vitesse d'écoulement du flux de gaz naturel liquéfié (4) et la vitesse du son dans le flux de gaz naturel liquéfié (4) sur la base de temps de parcours déterminés de signaux ultrasoniques émis et reçus avec le courant et à contre-courant du flux de gaz naturel liquéfié (4) sur un trajet de mesure,
- un capteur de température (6) conçu pour mesurer la température du flux de gaz naturel liquéfié (4), et
- une unité d'évaluation (14) reliée au dispositif de mesure à ultrasons (12) et au capteur de température (6), afin de recevoir des valeurs de mesure respectives pour la vitesse d'écoulement, la vitesse du son et la température,

l'unité d'évaluation (14) étant conçue pour déterminer, au moins sur la base de la vitesse d'écoulement et de la surface de section transversale (F) du flux de gaz naturel liquéfié (4), le débit volumique du flux de gaz naturel liquéfié (4), pour déterminer, au moins sur la base de la vitesse du son et de la température, au moyen d'une fonction de modèle, le pouvoir calorifique volumique du flux de gaz naturel liquéfié (4), et pour déterminer, sur la base du débit volumique déterminé et du pouvoir calorifique volumique déterminé, le débit énergétique transporté,

**caractérisé en ce que**

la fonction de modèle est définie sur la base d'un ensemble de données qui indique, pour une pluralité de compositions différentes de gaz naturel liquéfié, le pouvoir calorifique volumique d'une composition respective, et **en ce que** la fonction de modèle est un polynôme d'interpolation qui est déterminé par interpolation d'une pluralité de points d'appui contenus dans l'ensemble de données, les points d'appui indiquant, au moins pour une vitesse du son respective et une température respective, un pouvoir calorifique volumique déterminé par calcul et/ou expérimental.

2. Dispositif de mesure (10) selon la revendication 1, **caractérisé en ce que**

le polynôme d'interpolation est défini par l'équation

$$H_V = a_{00} + a_{10} \cdot c + a_{01} \cdot T + a_{20} \cdot c^2 + a_{11} \cdot c \cdot T + a_{02} \cdot T^2$$

où $H_V$ est le pouvoir calorifique volumique du flux de gaz naturel liquéfié (4), c est la vitesse du son du flux de gaz naturel liquéfié (4), $T$ est la température du flux de gaz naturel liquéfié (4) et $a_{ij}$ sont des coefficients.

3. Dispositif de mesure (20) pour mesurer un débit énergétique transporté par un flux de gaz naturel liquéfié (4), comprenant

 - un débitmètre massique (22) conçu pour mesurer le débit massique et la densité du flux de gaz naturel liquéfié (4) sur la base du principe de Coriolis,
 - un capteur de température (6) conçu pour mesurer la température du flux de gaz naturel liquéfié (4), et
 - une unité d'évaluation (14) reliée au débitmètre massique (22) et au capteur de température (6), afin de recevoir des valeurs de mesure respectives pour le débit massique, la densité et la température,

l'unité d'évaluation (14) étant conçue pour déterminer, au moins sur la base de la densité et de la température, au moyen d'une fonction de modèle, le pouvoir calorifique massique du flux de gaz naturel liquéfié (4), et pour déterminer, sur la base du flux massique déterminé et du pouvoir calorifique massique déterminé, le débit énergétique transporté,

**caractérisé en ce que**

la fonction de modèle est définie sur la base d'un ensemble de données qui indique, pour une pluralité de compositions différentes de gaz naturel liquéfié, le pouvoir calorifique massique d'une composition respective, et **en ce que** la fonction de modèle est un polynôme d'interpolation qui est déterminé par interpolation d'une pluralité de points d'appui contenus dans l'ensemble de données, les points d'appui indiquant, pour une densité respective et une température respective, un pouvoir calorifique massique déterminé par calcul et/ou expérimental.

4. Dispositif de mesure (20) selon la revendication 3,
**caractérisé en ce que**

le polynôme d'interpolation est défini par l'équation

$$H_M = b_{00} + b_{10} \cdot \rho + b_{01} \cdot T + b_{20} \cdot \rho^2 + b_{11} \cdot \rho \cdot T + b_{02} \cdot T^2$$

où $H_M$ est le pouvoir calorifique massique du flux de gaz naturel liquéfié (4), $\rho$ est la densité du flux de gaz naturel liquéfié (4), $T$ est la température du flux de gaz naturel liquéfié (4) et $b_{ij}$ sont des coefficients.

5. Dispositif de mesure (10, 20) selon l'une des revendications précédentes, **caractérisé en ce que**

l'ensemble de données comprend un groupe respectif de plusieurs points d'appui pour une pluralité de compositions différentes prédéterminées de gaz naturel liquéfié.

**6.** Dispositif de mesure (10, 20) selon l'une des revendications précédentes, **caractérisé en ce que**
un calcul des points d'appui est effectué en utilisant l'algorithme GERG-2008, la norme ISO-6578 et/ou la norme ISO-6976.

**7.** Dispositif de mesure (10) selon l'une des revendications précédentes,
**caractérisé en ce que**
le dispositif de mesure comprend en outre un capteur de pression relié à l'unité d'évaluation (14) et conçu pour mesurer la pression du flux de gaz naturel liquéfié (4), l'unité d'évaluation (14) étant conçue pour recevoir des valeurs de mesure de la pression provenant du capteur de pression et pour déterminer le pouvoir calorifique du flux de gaz naturel liquéfié (4) en supplément sur la base de la pression.

**8.** Procédé de mesure d'un débit énergétique transporté par un flux de gaz naturel liquéfié (4), comprenant les étapes consistant à :

mesurer la vitesse d'écoulement et de la vitesse du son du flux de gaz naturel liquéfié (4) sur la base de temps de parcours déterminés de signaux ultrasoniques émis et reçus avec le courant et à contre-courant du flux de gaz naturel liquéfié (4) sur un trajet de mesure,
mesurer la température du flux de gaz naturel liquéfié (4),
déterminer le débit volumique du flux de gaz naturel liquéfié (4) sur la base de la vitesse d'écoulement et de la surface de section transversale (F) du flux de gaz naturel liquéfié (4),
déterminer le pouvoir calorifique volumique du flux de gaz naturel liquéfié (4) au moins sur la base de la vitesse du son et de la température au moyen d'une fonction de modèle, la fonction de modèle étant défini sur la base d'un ensemble de données qui indique, pour une pluralité de compositions différentes de gaz naturel liquéfié, le pouvoir calorifique volumique d'une composition respective, et la fonction de modèle étant un polynôme d'interpolation qui est déterminé par interpolation d'une pluralité de points d'appui contenus dans l'ensemble de données, les points d'appui indiquant, au moins pour une vitesse du son respective et une température respective, un pouvoir calorifique volumique déterminé par calcul et/ou expérimental, et déterminer le débit énergétique transporté sur la base du débit volumique déterminé et du pouvoir calorifique volumique déterminé.

**9.** Procédé de mesure d'un débit énergétique transporté par un flux de gaz naturel liquéfié (4), comprenant les étapes consistant à :

mesurer le débit massique et la densité du flux de gaz naturel liquéfié (4) sur la base du principe de Coriolis,
mesurer la température du flux de gaz naturel liquéfié (4),
déterminer le pouvoir calorifique massique du flux de gaz naturel liquéfié (4) au moins sur la base de la densité et de la température au moyen d'une fonction de modèle, la fonction de modèle étant définie sur la base d'un ensemble de données qui indique, pour une pluralité de compositions différentes de gaz naturel liquéfié, le pouvoir calorifique massique d'une composition respective, et la fonction de modèle étant un polynôme d'interpolation qui est déterminé par interpolation d'une pluralité de points d'appui contenus dans l'ensemble de données, les points d'appui indiquant, pour une densité respective et une température respective, un pouvoir calorifique massique déterminé par calcul et/ou expérimental, et
déterminer le débit énergétique transporté sur la base du débit massique déterminé et du pouvoir calorifique massique déterminé.

10

2

F

12

6

4

14

Fig. 1

20

2

22

6

4

24

Fig. 2

Fig. 3

**EP 4 400 814 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3021117 B1
- US 2022205406 A1
- US 2019219556 A1
- US 2022349867 A1

**In der Beschreibung aufgeführte Nicht-Patentliteratur**

- **KUNZ, O. ; W. WAGNER.** The GERG-2008 Wide-Range Equation of State for Natural Gases and Other Mixtures: An Expansion of GERG-2004. *J. Chem. Eng. Data,* 2012, vol. 57 (11), 3032-3091
- GIIGNL Annual Report 2018. *International Group of Liquefied Natural Gas Importers,* 14. Dezember 2022, https://giignl.org/document/giignl-2018-annual-report
- *GIIGNL Annual Report,* 2018